# DEMANDE DE BREVET EUROPEEN

(11) **EP 4 753 267 A1**
(43) Date de publication de la demande: **03.06.2026**
(21) Numéro de dépôt: 25215119.6
(22) Date de dépôt: 12.11.2025
(51) Int. Cl.: H04N 21/214, H04N 21/236, H04N 21/434, H04N 21/81

(54) **DISPOSITIF ET PROCEDE DE CONTROLE DE SERVICES DE TELEVISEURS**

(30) Priorité: 19.11.2024 FR 2412638
(71) Demandeur: HBBLAB, 74650 CHAVANOD (FR)
(72) Inventeur: BRULET, Laurent, 74000 ANNECY (FR); BASSE, Emmanuel, 74000 ANNECY (FR)
(74) Mandataire: Ipsilon

(57) **Abrégé**

L'invention se rapporte à un dispositif de contrôle de flux multimédia sur des téléviseurs, comportant :
- un injecteur (1), comportant :
* des sources multimédia (S1, S2, S3),
* des moyens de génération d'un flux multimédia (F) à partir des sources (S1, S2, S3),

- au moins un téléviseur (10), relié à l'injecteur (1) de flux multimédia (F),

Dans lequel :
- chaque téléviseur (10) contient un identifiant (Id1, Id2),
- l'injecteur (1) de flux multimédia contient une table (Tab), contenant une liste de contenus multimédia accessible pour chacun des téléviseurs (10) et des modalités d'exécutions d'applications du flux multimédia (F),

l'injecteur (1) transmettant à chacun des téléviseurs (10) la table (Tab) contenant les listes des contenus multimédia accessible à chacun des téléviseurs (10) et le flux multimédia (F), et les téléviseurs (10) étant configurés pour afficher ou exécuter les contenus accessibles et applications de la liste en fonction de leur identifiant (Id1, Id2).

## Description

### Domaine technique

La présente invention se rapporte au domaine de la télévision, et en particulier à la gestion de service dans un réseau de téléviseurs, tel qu'il en existe dans les lieux publics comme les hôtels, les hôpitaux, les gares etc. afin de contrôler l'affichage et les droits d'accès des téléviseurs à des services et flux multimédias.

### Art antérieur

Les lieux publics tels que les hôtels, hôpitaux, campings, écoles et autres collectivités ont souvent recours à des réseaux de téléviseurs connectés à un récepteur central ou « injecteur » de flux multimédias. Chaque téléviseur dispose d'accès à des canaux multimédias ou chaînes spécifiques, que l'utilisateur peut choisir.

L'injecteur de flux multimédia est généralement un boîtier connecté à des sources de flux multimédia tels qu'une antenne satellite, une connexion à la télévision numérique terrestre (TNT), une connexion IP à un serveur de télévision numérique internet, etc. Ces sources génèrent des chaînes de contenus multimédias individuels, souvent thématiques et/ou destinées à des utilisateurs différents.

Par exemple, un certain nombre de ces chaînes peut être rendu accessible à tous les utilisateurs, tandis que certaines chaînes ou « bouquets » de chaînes nécessitent que l'utilisateur ait payé une souscription supplémentaire, afin d'acquérir les droits d'accès à ces chaînes.

Un téléviseur spécifique peut en outre n'avoir qu'une chaîne disponible, pour, par exemple, diffuser en boucle un message de bienvenue dans une entrée, ou bien un message à caractère informatif sur le lieu où est situé le téléviseur.

Les chaînes ou flux multimédia sont émis par une source qui est par exemple un boîtier récepteur de signal de télévision par satellite (DVB-S), câble (DVB-C) ou hertzien (DVB-T).

Les téléviseurs dits « intelligents » ou téléviseurs connectés utilisent pour ce faire des réseaux IP (Internet Protocol) et nécessitent donc des connecteurs Ethernet ou une connexion sans fil telle que le WiFi, formant un service appelé « IPTV ».

Les menus permettant l'affichage, la sélection et l'acquisition de droits d'accès des téléviseurs sont alors gérés par des protocoles internet de type HTTP (HyperText Transfer Protocol) par les réseaux Ethernet et WiFi de façon connue, avec communication bidirectionnelle entre les téléviseurs individuels et un boîtier central formant source de flux multimédia et gestionnaire de droits d'accès. On connaît divers systèmes d'accès conditionnel (« Conditional Access » CA) tels que le standard DVB (« Digital Video Broadcasting ») qui cryptent des chaînes mais ne permettent pas de gérer une interface graphique spécifique, et le nom des chaînes cryptées restent affiché dans le plan de chaînes même lorsqu'elles ne sont pas disponibles pour l'utilisateur.

Toutefois, certains lieux ou bâtiments ne sont pas pourvus de réseaux Ethernet dédiés aux téléviseurs, mais présentent des câbles de type coaxial simples, ne permettant notamment pas d'instaurer une communication bidirectionnelle de type « IPTV ».

La technologie DOCSIS (« Data Over Cable Service Interface Specification ») permet d'avoir un service équivalent mais au prix d'un dispositif modem au niveau de chaque téléviseur. Le réglage du réseau coaxial ainsi obtenu est complexe et le déploiement plus long. Le réseau est en outre relativement énergivore, et les modems sont parfois arrachés et doivent être entretenus.

Les solutions DOCSIS et DVB-CA reposent en outre sur des cryptages et décryptages à cartes à puce ou clés de type clé USB, qui peuvent être volées ou perdues.

Des normes telles que la norme HbbTV (Hybrid Broadcast Broadband TeleVision) en mode dit « broadcast » (diffusion) permettent toutefois l'affichage de menus interactifs et d'informations spécifiques localement sur un téléviseur avec une communication unidirectionnelle, mais notamment sans communication retour, du téléviseur à l'injecteur de flux multimédia.

Il serait notamment intéressant de pouvoir émuler sur ces réseaux à câbles coaxiaux, les services de la télévision à communication bidirectionnelle telle que l'IPTV, sans présenter les désavantages précédemment cités (consommation d'énergie, modems et clés supplémentaires etc.).

### Résumé de l'invention

Afin de répondre à ce besoin l'invention propose un dispositif de contrôle de flux multimédia sur des téléviseurs, comportant :
- un injecteur de flux multimédia, comportant :
   * au moins une source de contenu multimédia,
   * au moins un moyen de génération d'un flux multimédia contenant une ou plusieurs applications et contenus multimédias individuels à partir des sources,
   * une mémoire électronique et au moins un moyen électronique d'exécution de programmes permettant le stockage et la modification d'informations sur ladite mémoire électronique,
- au moins un téléviseur, relié à l'injecteur de flux multimédia au travers d'un réseau de télédistribution radiofréquence hertzien ou par câble comportant :
   * une mémoire électronique et des moyens d'exécution des applications permettant le stockage et la modification d'informations sur ladite mémoire électronique,
   * des moyens d'affichage des contenus multimédias spécifiques sur le téléviseur.

Le dispositif selon l'invention est notamment réalisable sous forme de réseau à transmission unilatérale descendante, de l'injecteur aux téléviseurs. Dans le dispositif de contrôle de flux multimédia sur des téléviseurs :
- la mémoire électronique de chaque téléviseur contient un identifiant du téléviseur,
- la mémoire électronique de l'injecteur de flux multimédia contient une table, contenant une liste de contenus multimédia accessibles et des modalités d'exécution des applications pour chacun des téléviseurs identifiés par leurs identifiants,

l'injecteur de flux multimédia étant configuré pour transmettre à chacun des téléviseurs la table contenant les listes des contenus multimédia accessibles à chacun des téléviseurs et le flux multimédia, et
les téléviseurs étant configurés pour afficher ou exécuter les applications et contenus multimédia accessibles en fonction de leur identifiant.

En outre, dans le dispositif de contrôle de flux multimédia sur des téléviseurs :
- les téléviseurs et l'injecteur sont pourvus de moyen d'exécution de protocoles HbbTV,
- le flux multimédia comporte un carrousel DSM-CC contenant des données pouvant être téléchargées par les téléviseurs,
- ledit carrousel DSM-CC comporte une ou plusieurs applications HbbTV encapsulées qui, lorsqu'exécutées par le téléviseur, configurent les téléviseurs de façon spécifique, chaque téléviseur pouvant être configuré pour exécuter différemment les applications en fonction de son identifiant propre, au moyen de la table contenant les listes des contenus multimédia accessibles par chacun des téléviseurs.

Ainsi, malgré le caractère uniquement descendant de la transmission de données, et l'unicité du flux multimédia dans le réseau, chaque téléviseur présente un comportement unique et programmable au moyen de l'injecteur. Aucun démodulateur ou modem supplémentaire n'est requis au niveau des téléviseurs.

Cette configuration permet de programmer le comportement individuel de chaque téléviseur uniquement au moyen de son identifiant, sans intervention directe sur le téléviseur.

De plus, l'intégration de la table de droits et contenus accessibles dans le carrousel DSM CC avec une compatibilité HbbTV des téléviseurs permet, du fait du caractère « push » et régulièrement consulté du carrousel, une mise à jour quasi instantanée en continu des droits, sans redémarrage d'applications. En outre, étant donné que la communication reste dans l'environnement HbbTV, la sécurité des accès est améliorée.

Le dispositif selon l'invention peut en outre présenter une ou plusieurs des caractéristiques suivantes, prises seules ou en combinaison.

L'injecteur de flux multimédia peut comporter :
- une connexion à un réseau informatique comportant un serveur connecté à l'injecteur,
- des moyens de génération d'un contenu multimédia comportant une adresse informatique du serveur pour l'affichage sur un ou plusieurs des téléviseurs de l'adresse informatique, et
- l'accès au serveur au moyen d'un terminal utilisateur par le réseau au moyen de l'adresse informatique donnant accès à des menus interactifs pour la modification de la liste de contenus multimédia accessibles au téléviseur.

L'injecteur de flux multimédia peut en particulier comporter :
- une connexion à un réseau informatique comportant un serveur connecté à l'injecteur et
- des moyens de génération d'un contenu multimédia comportant une adresse informatique du serveur pour l'affichage sur au moins un des téléviseurs de l'adresse informatique,
- l'accès au serveur au moyen d'un terminal utilisateur par le réseau au moyen de l'adresse informatique donnant accès à des menus interactifs pour la modification de la liste de contenus multimédia accessibles au téléviseur.

L'utilisateur peut alors modifier les droits et paramètres du téléviseur au moyen du terminal utilisateur, qui peut notamment être son téléphone, avec éventuellement un paiement associé.

Le réseau informatique peut notamment être un réseau internet ou intranet, et l'adresse affichée peut être alors une adresse IP, qui peut notamment être affichée sous forme encodée de type QR code. L'injecteur de flux multimédia peut alors être configuré pour détecter une modification de la table de listes de contenus multimédia accessibles, et, lorsqu'une modification de la table est détectée, pour envoyer la table modifiée aux téléviseurs.

En alternative, l'injecteur de flux multimédia peut être configuré pour envoyer à des intervalles réguliers la table de listes des contenus multimédia accessibles aux téléviseurs.

Le téléviseur peut comporter :
- un récepteur du flux multimédia, ledit flux multimédia étant composé de paquets de données encapsulées, contenant d'une part des médias et d'autre part des applications sous forme d'instructions exécutables qui, lorsqu'exécutées programment le comportement du téléviseur, avec des applications associées à un ou plusieurs des identifiants des téléviseurs, le récepteur étant configuré pour isoler et séparer les médias des applications,
- un gestionnaire d'applications, configuré pour télécharger dans la mémoire du téléviseur lesdites données et pour ensuite les exécuter sous forme de programmes informatiques, qui reçoit les applications isolées par le récepteur,
- un gestionnaire de fichiers multimédia, configuré au moyen des applications téléchargées et exécutées par le gestionnaire d'applications, le gestionnaire de fichiers multimédia étant configuré pour filtrer des médias accessibles des médias inaccessibles parmi les médias du flux multimédia,
- un navigateur, qui affiche les médias accessibles du flux multimédia dans des menus configurés au moyen des applications.

Le flux multimédia peut alors notamment être un ou plusieurs flux MPTS.

La mémoire électronique volatile de chaque téléviseur est configurée pour stocker les informations, en particulier relatives aux droits d'accès et aux applications.

L'invention se rapporte en outre au procédé de gestion de flux multimédia associé, d'un injecteur de flux multimédia à un téléviseur dans un dispositif tel que précédemment décrit, comportant les étapes :
- dans une phase d'initialisation, communication d'un identifiant de chacun des téléviseurs, stocké dans la mémoire électronique du téléviseur, à l'injecteur de flux multimédia,
- stockage dans une mémoire électronique des identifiants des téléviseurs par l'injecteur et génération par l'injecteur d'une table de listes de contenus multimédia accessibles par les téléviseurs identifiés avec leur identifiant,
- envoi de la table aux téléviseurs et stockage dans la mémoire électronique des téléviseurs de la liste de contenus multimédia accessibles à leur identifiant contenue dans la table,
- affichage ou exécution par les téléviseurs uniquement des contenus accessibles de la liste associée à leur identifiant.

L'identifiant de chaque téléviseur peut, lors de la phase d'initialisation, être généré pseudo aléatoirement et stocké sur une mémoire électronique du téléviseur.

L'injecteur de flux multimédia peut notamment comporter une connexion à un réseau informatique comportant un serveur présentant un accès à la mémoire informatique de l'injecteur de flux multimédia contenant la liste de contenus multimédia accessibles d'au moins un des téléviseurs et des moyens de modification de la liste de contenus multimédia accessibles audit téléviseur.

Le procédé peut alors comporter en outre les étapes de :
- génération d'un contenu multimédia comportant l'adresse informatique dans le réseau du serveur,
- affichage sur le téléviseur du contenu multimédia comportant l'adresse informatique du serveur pour permettre à l'utilisateur de modifier la liste des contenus accessibles au téléviseur au moyen d'un terminal utilisateur connecté au serveur via l'adresse informatique affichée dans le contenu multimédia,
- envoi par l'injecteur de flux multimédia de la liste de contenus multimédia accessibles modifiée aux téléviseurs.

L'invention se rapporte aussi au produit programme d'ordinateur comprenant des instructions dont l'exécution par un ordinateur partie ou connecté au dispositif précédemment décrit amène ledit dispositif à exécuter les étapes du procédé ci-dessus.

### Brève description des figures

D'autres avantages et caractéristiques de l'invention apparaîtront à la lecture de la description des figures ci-après, parmi lesquelles :
- la [Fig. 1] est un schéma des composant du réseau de téléviseurs connectés à l'injecteur de flux multimédia,
- la [Fig. 2] est un organigramme reprenant de façon schématique les principales étapes du procédé de gestion du réseau de la figure 1,
- la [Fig. 3] est un organigramme d'une variante de procédé de gestion de la figure 2,
- la [Fig. 4] est un organigramme fonctionnel des différents organes d'un téléviseur pour le réseau de la figure 1.

Les modes de réalisation représentés sont donnés à titre d'exemples illustratifs et non limitatifs. D'autres modes de réalisation peuvent notamment être obtenus par variation ou combinaison des modes de réalisation exposés.

### Description détaillée des figures

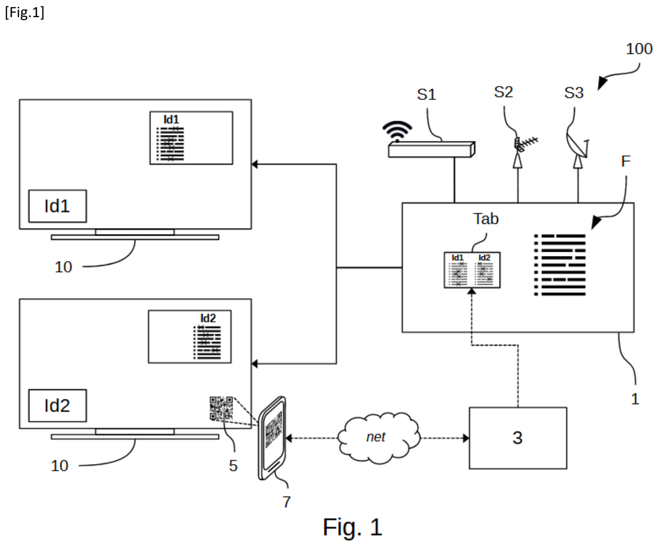

La figure 1 est une représentation schématique d'un dispositif 100 de contrôle de flux multimédia F. Le dispositif 100 comporte un injecteur 1 de contenu multimédia, relié à des sources S1, S2, S3. Ces sources sont par exemple un boîtier internet S1, connecté à un service de télévision numérique par internet, une antenne numérique terrestre S2, une antenne satellite S3.

Chacune de ces sources diffuse des contenus multimédia sous forme de flux ou chaînes, groupés en bouquets de chaînes, et d'applications spécifiques, par exemple sous forme d'ensembles d'instructions, de menus et de contenus à afficher séquentiellement et avec lesquels l'utilisateur peut interagir.

La norme HbbTV permet notamment la gestion de telles applications, y compris en mode « Broadcast » de diffusion unidirectionnelle.

L'injecteur 1 peut regrouper ces bouquets en un flux multimédia F envoyé par exemple via au moins un câble coaxial notamment d'impédance 50 ou 75 ohm, à prise antenne (**IEC 61169-2)** ou « fiche F », au travers d'un réseau de télédistribution Radio Fréquence RF (VHF/UHF) hertzien ou par câble, à des téléviseurs 10. Le flux multimédia F peut comprendre un ou plusieurs flux MPTS transmis sur une ou plusieurs fréquences.

Une partie au moins des transmissions peut en alternative ou complément passer par des émetteurs et récepteurs radiofréquence RF analogiques.

L'injecteur 1 peut notamment se présenter sous forme d'un ordinateur de gestion de flux multimédia, pourvu d'une sortie Radio Fréquence pour l'injection dans le réseau Radio Fréquence.

Deux téléviseurs 10 sont représentés, mais un nombre plus grand de téléviseurs 10 est bien sûr possible.

Ces téléviseurs 10 comportent notamment des mémoires électroniques et des moyens d'exécution de programmes et d'instructions spécifiques permettant de modifier le contenu de ces mémoires et d'afficher des contenus spécifiques parmi le flux multimédia F ou de générer des contenus à partir du contenu de leur mémoire électronique et d'instructions contenues dans le flux multimédia F.

Chaque téléviseur 10 est identifié par un identifiant unique Id1, Id2 dans le réseau de télédistribution radiofréquence, stocké sur une mémoire interne du téléviseur 10. L'identifiant Id1, Id2 peut notamment être généré de manière pseudo aléatoire. L'injecteur 1 contient une liste des identifiants Id1, Id2, communiqués à l'injecteur lors de l'installation des téléviseurs 10 ou lors de l'addition d'un téléviseur 10 au dispositif 100.

Chaque téléviseur 10 peut avoir un identifiant Id1, Id2 propre et unique, ou bien des téléviseurs 10 dont le comportement doit être identique peuvent comporter le même identifiant Id1, Id2.

Les identifiants Id1, Id2 peuvent en alternative être encodés dans un composant électronique (« hardware ») lors de la fabrication des téléviseurs 10.

L'injecteur 1 génère ou stocke dans une mémoire électronique une table Tab des identifiants Id1, Id2 avec pour chacun des téléviseurs 10 identifiés une liste de contenus accessibles et de contenus inaccessibles dans le flux multimédia F.

La table Tab est émise vers les téléviseurs 10 qui isolent dans celle-ci la liste relative à leur identifiant Id1, Id2, et filtrent en conséquence les contenus du flux multimédia F.

Par exemple, un des téléviseurs 10 peut avoir accès à un ensemble de chaînes plus important dans le cadre d'un service de qualité plus élevée ou « premium », par exemple d'une chambre d'hôtel plus chère, ou bien des chaînes thématiques, en lien avec l'emplacement ou le public attendu du téléviseur 10.

Le flux multimédia F peut notamment contenir des instructions de personnalisation des menus et contenus affichés par le téléviseur 10. Par exemple, la langue d'affichage des menus et des médias, l'ordre des chaînes télévisées du bouquet accessible, la définition des images des contenus multimédia peuvent être contrôlés par le flux multimédia F via ces instructions.

En outre, le flux multimédia F peut comporter une ou plusieurs applications, sous forme d'instructions exécutables par les téléviseurs 10, pour programmer le comportement desdits téléviseurs 10. La table Tab comporte alors pour chaque identifiant Id1, Id2 des téléviseurs 10 des modalités d'exécution spécifiques des applications. Ainsi chaque téléviseur 10 exécute ou non une partie spécifique de la ou des applications, ou encore exécute la ou les applications avec des paramètres et des accès spécifiques, selon son identifiant Id1, Id2.

La table Tab des téléviseurs 10 et des contenus qu'ils affichent et exécutent ou non peut être rendue accessible et modifiable par un terminal utilisateur 7 tel qu'un ordinateur, une tablette ou un téléphone connecté à l'injecteur 1 de flux multimédia F, avec notamment l'édition de profils spécifiques, ayant chacun un ensemble de contenus multimédias accessibles et d'applications à exécuter pour personnaliser le téléviseur 10 et le service associé à celui-ci.

Pour permettre à un utilisateur d'un téléviseur 10 de modifier la liste de contenu multimédia de la table Tab associée, l'injecteur 1 de flux multimédia F comporte une connexion à un serveur informatique 3 d'un réseau informatique *net* et des moyens de génération d'un contenu multimédia comportant une adresse informatique 5, correspondant au serveur 3 du réseau informatique *net.*

L'adresse informatique 5 est par exemple affichée sous forme d'adresse IP « internet protocol » de type url (« localisateur uniforme de ressource) si le réseau *net* est un réseau internet ou intranet, ou de code d'accès rapide de type code QR ou code barre.

L'utilisateur peut alors utiliser un terminal utilisateur 7 tel qu'un téléphone, une tablette ou un ordinateur portable pour se connecter au serveur 3 au moyen de l'adresse qui lui a été communiquée. Le serveur informatique 3 donne à l'utilisateur accès à la mémoire informatique de l'injecteur 1 de flux multimédia F contenant la liste de contenus multimédia accessibles au téléviseur 10 sur lequel est affiché l'adresse informatique 5, et comporte des moyens de modification de ladite liste, par exemple sous forme de menu interactif pour sélectionner un profil ou débloquer des options.

En particulier le serveur informatique 3 peut comporter une application de facturation, de paiement ou de connexion à un terminal de paiement, et conditionner une partie des accès à des contenus ou ensembles de contenus prédéterminés à un paiement.

L'injecteur 1 de flux multimédia F peut alors être configuré pour détecter une modification de la table Tab contenant les listes de contenus multimédia accessibles, et pour envoyer ensuite la table Tab contenant la liste modifiée aux téléviseurs 10 via le flux multimédia F.

En alternative, l'injecteur 1 peut envoyer la table Tab à des intervalles régulier aux téléviseurs 10, qu'elle ait été modifiée ou non.

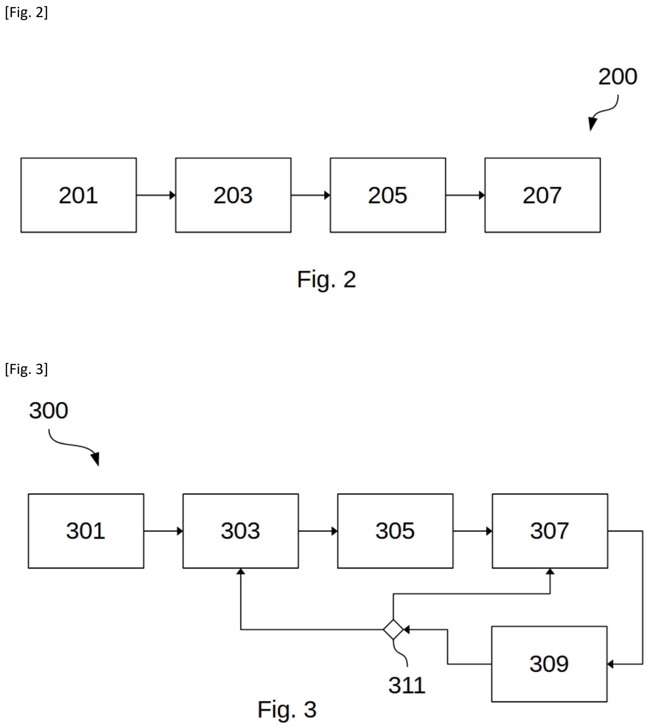

La figure 2 est un organigramme reprenant les principales étapes du procédé 200 de gestion de flux multimédia F au moyen du dispositif 100 de la figure 1.

La première étape 201 est la génération, lors d'une initialisation à l'installation du dispositif 100 ou lors de l'ajout d'un ou plusieurs téléviseurs 10, de l'identifiant Id1, Id2 propre à chaque téléviseur 10, par exemple par génération pseudo aléatoire, et le stockage dans la mémoire du téléviseur 10 dudit identifiant Id1, Id2. Les identifiants Id1, Id2 sont communiqués, par exemple par l'intermédiaire d'un installateur ou d'un administrateur du dispositif 100, à l'injecteur 1 qui les stocke dans sa mémoire. Dans une deuxième étape 203, l'injecteur 1 stocke les identifiants dans sa propre mémoire, et génère pour chacun des identifiants Id1, Id2 une liste de contenus multimédias accessibles dans le flux multimédia F émis, composant ainsi la table Tab.

Lors d'une troisième étape 205, la table Tab contenant les identifiants Id1, Id2 et la liste des contenus multimédias accessibles à chacun des téléviseurs 10 identifiés est ensuite envoyée aux téléviseurs 10 avec le flux multimédia F, afin que chacun des téléviseurs 10 stocke dans sa mémoire la liste des contenus auxquels il a accès, partie de la table Tab. Les droits d'accès aux contenus et les applications sont notamment stockés en mémoire volatile dans la mémoire électronique de chacun des téléviseurs. Lors de la quatrième étape 207, les téléviseurs 10 filtrent ensuite les contenus du flux multimédia F selon la liste qui leur a été transmise.

La figure 3 illustre une variante du procédé 300, pour un dispositif 100 qui comporte une connexion via le réseau informatique *net* à un serveur 3 présentant un accès à la mémoire informatique de l'injecteur 1 de flux multimédia F contenant liste de contenus multimédia accessibles d'au moins un des téléviseurs 10, et des moyens de modification de la liste de contenus multimédia accessibles au dit téléviseur 10.

Les deux premières étapes 301, 303 sont identiques aux deux premières étapes 201, 203 du procédé 200 de la figure 2 et correspondent respectivement à l'initialisation avec communication des identifiants Id1, Id2, et à la génération de la table Tab :
- génération, lors d'une initialisation à l'installation du dispositif 100 ou lors de l'ajout d'un ou plusieurs téléviseurs 10, de l'identifiant Id1, Id2 propre à chaque téléviseur 10, et le stockage dans la mémoire du téléviseur 10 dudit identifiant Id1, Id2 et
- stockage des identifiants dans sa propre mémoire par l'injecteur, et génération pour chacun des identifiants Id1, Id2 d'une liste de contenus multimédias accessibles dans le flux multimédia F émis pour former la table Tab.

Lors de la troisième étape 305 d'envoi de la table Tab et du flux multimédia F par l'injecteur 1, l'injecteur 1 envoie aussi un contenu multimédia comportant notamment l'adresse informatique 5 du serveur 3 au téléviseur 10 avec des instructions pour permettre à l'utilisateur du téléviseur 10 de connecter un terminal utilisateur au serveur, par exemple en intégrant l'affichage de l'adresse dans une application spécifique avec différents menus et chemins d'accès pour que l'utilisateur du téléviseur 10 puisse être invité à modifier les contenus accessibles du téléviseur 10.

Lors de la quatrième étape 307 de filtrage du contenu par le téléviseur 10 en fonction de la liste de contenus accessibles, un affichage à l'écran du contenu multimédia comportant l'adresse informatique 5 du serveur 3 est alors rendu possible ou, selon une variante, automatique à chaque démarrage du téléviseur 10.

Lors d'une cinquième étape 309 l'utilisateur accède à la liste relative à un téléviseur 10 dans la table Tab, et peut ou non modifier cette liste des contenus multimédia accessibles.

Partant, lors d'une sixième étape 311 conditionnelle, si l'utilisateur a modifié la liste des contenus accessibles depuis le serveur 3, le procédé 300 retourne à la deuxième étape 303 de génération et d'envoi de la table Tab aux téléviseurs 10 par l'injecteur 1, en incluant les modifications apportées. Si l'utilisateur n'a pas modifié la liste des contenus accessibles à un téléviseur 10, le procédé 300 retourne à la quatrième étape 307 de filtration du flux multimédia F.

Les téléviseurs 10 et l'injecteur 1 peuvent notamment être pourvus de moyen d'exécution de protocoles HbbTV, sous forme de mémoire électronique et processeurs au standard ETSI TS 102796. Le flux multimédia F peut alors se présenter sous forme d'un multiplexage de services et d'un carrousel DSM-CC (« Digital Storage Management Command and Control).

En alternative ou complément, le flux multimédia F peut en outre comporter des applications, c'est-à-dire des instructions et protocoles HbbTV qui, lorsqu'exécutés par le téléviseur 10, configurent les téléviseurs 10 de façon spécifique. Le flux multimédia F peut alors contenir plusieurs applications associés chacun à un identifiant Id1, Id2, chaque téléviseur 10 exécutant uniquement les applications associés à son identifiant Id1, Id2 propre.

Il peut aussi y avoir parmi les une même application exécutée différemment, ou avec des paramètres et accès à des parties différentes de ladite application par chacun des téléviseurs 10 en fonction de son identifiant Id1, Id2.

Les applications peuvent alors restreindre les chaînes et médias accessibles au téléviseur 10, et notamment masquer les chaînes et médias auxquels le téléviseur 10 n'a pas accès en les excluant des menus et faisceaux de chaînes.

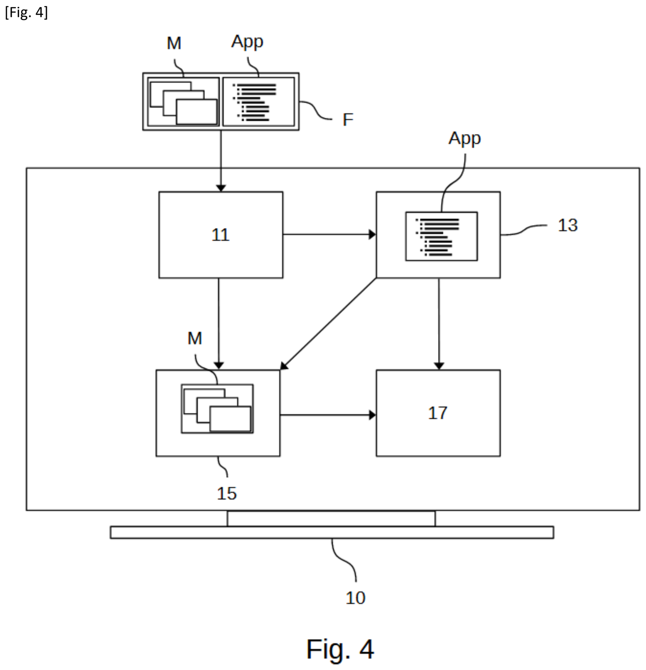

La figure 4 illustre sous forme d'organigramme fonctionnel un téléviseur 10 ainsi configuré.

Le téléviseur 10 comporte un récepteur du flux multimédia F. Ledit flux multimédia F est alors composé de paquets de données encapsulées, contenant d'une part des médias M sous forme de vidéos, images et sons, et d'autre part des applications App, sous forme d'instructions exécutables qui, lorsqu'exécutées programment le comportement du téléviseur 10 (menus, configuration d'image, de son etc.).

Le flux multimédia F est reçu au niveau d'un récepteur 11 du téléviseur 10, qui isole et sépare les médias M des applications App. Les applications App sont par exemple des applications HbbTv, modulées en DVB-C, DVB-C2, DVB-T ou DVB-T2. Les médias M sont par exemple encodés sous forme de flux MPTS (« MPEG Transport System »).

Les données correspondant aux applications App sont ensuite envoyées à un gestionnaire d'application 13, configuré pour télécharger dans la mémoire du téléviseur lesdites données et pour ensuite les exécuter sous forme de programmes informatiques.

Les applications App comportent notamment des instructions concernant les médias M du flux multimédia F. Notamment, ces instructions peuvent comporter le caractère accessible ou non de sous-ensembles des médias M, par exemple sous forme de bouquets de chaînes accessibles ou non.

Les médias M sont ensuite envoyés vers un gestionnaire de fichiers multimédia 15, configuré au moyen des applications App téléchargées et exécutées par le gestionnaire d'applications 13. Le gestionnaire de fichiers multimédia 15 est alors configuré pour filtrer les médias accessibles des médias inaccessibles parmi les médias M du flux multimédia F.

Lesdits médias accessibles sont alors rendus accessibles pour l'utilisateur du téléviseur 10 par un navigateur 17, qui affiche les médias accessibles dans des menus configurés au moyen des applications App.

Le navigateur 17 permet alors à l'utilisateur du téléviseur 10 de sélectionner au moyen d'une télécommande parmi les médias M accessibles ceux qu'il souhaite afficher sur le téléviseur 10, en masquant complètement les médias inaccessibles dans les menus de façon transparente pour l'utilisateur du téléviseur 10.

Le dispositif 100 de contrôle de flux multimédia F permet ainsi d'émuler des services de télévision de type IPTV en l'absence de voie physique de retour numérique des téléviseurs 10 à l'injecteur 1 de flux multimédia F, et une seule voie de sortie de flux multimédia F de l'injecteur 1 aux téléviseurs 10 dans un réseau de type radio fréquence.

## Revendications

1. Dispositif de contrôle de flux multimédia sur des téléviseurs, comportant :
- un injecteur (1) de flux multimédia (F), comportant :
* au moins une source (S1, S2, S3) de contenu multimédia,
* au moins un moyen de génération d'un flux multimédia (F) contenant une ou plusieurs applications (App) et contenus multimédias (M) individuels à partir des sources (S1, S2, S3),
* une mémoire électronique et au moins un moyen électronique d'exécution de programmes permettant le stockage et la modification d'informations sur ladite mémoire électronique,
- au moins un téléviseur (10), relié à l'injecteur (1) de flux multimédia (F) au travers d'un réseau de télédistribution radiofréquence hertzien ou par câble comportant :
* une mémoire électronique et des moyens d'exécution des applications (App) permettant le stockage et la modification d'informations sur ladite mémoire électronique,
* des moyens d'affichage des contenus multimédias (M) spécifiques sur le téléviseur (10),
dans lequel :
- la mémoire électronique de chaque téléviseur (10) contient un identifiant (Id1, Id2) du téléviseur (10),
- la mémoire électronique de l'injecteur (1) de flux multimédia (F) contient une table (Tab), contenant une liste de contenus multimédia (M) accessibles et des modalités d'exécution des applications (App) pour chacun des téléviseurs (10) identifiés par leurs identifiants (Id1, Id2),
l'injecteur de flux multimédia (1) étant configuré pour transmettre à chacun des téléviseurs (10) la table (Tab) contenant les listes des contenus multimédia (M) accessible à chacun des téléviseurs (10) et le flux multimédia (F), et
les téléviseurs (10) étant configurés pour afficher ou exécuter les applications (App) et contenus multimédia (M) accessibles en fonction de leur identifiant (Id1, Id2),
**caractérisé en ce que** :
- les téléviseurs (10) et l'injecteur (1) sont pourvus de moyen d'exécution de protocoles HbbTV,
- le flux multimédia (F) comporte un carrousel DSM-CC contenant des données pouvant être téléchargées par les téléviseurs (10),
- ledit carrousel DSM-CC comporte une ou plusieurs applications HbbTV encapsulées qui, lorsqu'exécutées par le téléviseur (10), configurent les téléviseurs (10) de façon spécifique, chaque téléviseur (10) pouvant être configuré pour exécuter différemment les applications (App) en fonction de son identifiant (Id1, Id2) propre, au moyen de la table (Tab) contenant les listes des contenus multimédia (M) accessibles par chacun des téléviseurs (10).

2. Dispositif de contrôle selon la revendication précédente, **caractérisé en ce que** l'injecteur (1) de flux multimédia (F) comporte :
- une connexion à un réseau informatique *(net)* comportant un serveur (3) connecté à l'injecteur (1) et
- des moyens de génération d'un contenu multimédia comportant une adresse informatique (5) du serveur (3) pour l'affichage sur au moins un des téléviseurs (10) de l'adresse informatique (5),
- l'accès au serveur (3) au moyen d'un terminal utilisateur (7) par le réseau *(net)* au moyen de l'adresse informatique (5) donnant accès à des menus interactifs pour la modification de la liste de contenus multimédia accessibles au téléviseur (10).

3. Dispositif selon la revendication précédente, **caractérisé en ce que** le réseau informatique est un réseau internet ou intranet, et l'adresse affichée est une adresse IP.

4. Dispositif selon la revendication 2 ou 3, **caractérisé en ce que** l'injecteur (1) de flux multimédia (F) est configuré pour détecter une modification de la table (Tab) de listes de contenus multimédia (M) accessibles, et, lorsqu'une modification de la table (Tab) est détectée, pour envoyer la table (Tab) modifiée au téléviseurs (10).

5. Dispositif selon la revendication 2 ou 3, **caractérisé en ce que** l'injecteur (1) de flux multimédia (F) est configuré pour envoyer à des intervalles réguliers la table (Tab) de listes des contenus multimédia accessibles aux téléviseurs (10).

6. Dispositif selon l'une des revendications précédentes, **caractérisé en ce que** le téléviseur (10) comporte :
- un récepteur (11) du flux multimédia (F), ledit flux multimédia (F) étant composé de paquets de données encapsulées, contenant d'une part un ou plusieurs médias (M), et d'autre part une ou plusieurs applications (App) sous forme d'instructions exécutables qui, lorsqu'exécutées programment le comportement du téléviseur (10), avec un ou plusieurs médias (M) associés à un ou plusieurs des identifiants (Id1, Id2) des téléviseurs (10), le récepteur (11) étant configuré pour isoler et séparer les médias (M) des applications (App),
- un gestionnaire d'application (13), configuré pour recevoir les applications (App) isolées par le récepteur (11) et télécharger dans la mémoire du téléviseur (10) lesdites données et pour ensuite les exécuter sous forme de programmes informatiques,
- un gestionnaire de fichiers multimédia (15), configuré au moyen des applications (App) téléchargées et exécutées par le gestionnaire d'applications (13), le gestionnaire de fichiers multimédia (15) étant configuré pour filtrer des médias accessibles des médias inaccessibles parmi les médias (M) du flux multimédia (F),
- un navigateur (17), qui affiche les médias accessibles du flux multimédia (F) dans des menus configurés au moyen des applications (App).

7. Dispositif selon la revendication 6, **caractérisé en ce que** le flux multimédia (F) comprend un ou plusieurs flux MPTS.

8. Dispositif selon l'une des revendications précédentes, **caractérisé en ce que** le l'identifiant (Id1, Id2) de chacun des téléviseurs (10) est unique dans le réseau de télédistribution radiofréquence.

9. Procédé de gestion de flux multimédia (F) d'un injecteur (1) de flux multimédia (F) à un téléviseur (10) dans un dispositif (100) selon l'une quelconque des revendications précédentes, comportant les étapes :
- dans une phase d'initialisation, communication d'un identifiant (Id1, Id2) de chacun des téléviseurs (10), stocké dans la mémoire électronique du téléviseur (10), à l'injecteur (1) de flux multimédia (F),
- stockage dans une mémoire électronique des identifiants (Id1, Id2) des téléviseurs (10) par l'injecteur (1) et génération par l'injecteur (1) d'une table (Tab) de listes de contenus multimédia accessibles par les téléviseurs (10) identifiés avec leur identifiant (Id1, Id2),
- envoi de la table (Tab) aux téléviseurs (10) et stockage dans la mémoire électronique des téléviseurs de la liste de contenus multimédia accessibles à leur identifiant (Id1, Id2) contenue dans la table (Tab),
-- affichage ou exécution par les téléviseurs (10) uniquement des contenus accessibles de la liste associée à leur identifiant (Id1, Id2).

10. Procédé selon la revendication précédente, **caractérisé en ce que** l'identifiant (Id1, Id2) du téléviseur (10) est, lors de la phase d'initialisation, généré pseudo aléatoirement et stocké sur une mémoire électronique du téléviseur (10).

11. Procédé selon la revendication 9 ou 10, dans lequel l'injecteur de flux multimédia comporte une connexion à un réseau informatique *(net)* comportant un serveur (3) présentant un accès à la mémoire informatique de l'injecteur (1) de flux multimédia (F) contenant la liste de contenus multimédia (M) accessibles d'au moins un des téléviseurs (10), et des moyens de modification de la liste de contenus multimédia accessibles au dit téléviseur (10), **caractérisé en ce qu'**il comporte en outre les étapes :
- génération d'un contenu multimédia comportant l'adresse informatique (5) dans le réseau *(net)* du serveur (3),
- affichage sur le téléviseur (10) du contenu multimédia comportant l'adresse informatique (5) du serveur (3) pour permettre à l'utilisateur de modifier la liste des contenus accessibles au téléviseur (10) au moyen d'un terminal utilisateur (7) connecté au serveur (3) via l'adresse informatique (5) affichée dans le contenu multimédia,
- envoi par l'injecteur (1) de flux multimédia (F) de la liste de contenus multimédia accessibles modifiée aux téléviseurs (10).

12. Produit programme d'ordinateur comprenant des instructions dont l'exécution par un ordinateur partie ou connecté au dispositif (100) selon l'une quelconque des revendication 1 à 9 amène ledit dispositif (100) à exécuter les étapes du procédé selon l'une quelconque des revendications 9 à 11.
